# FASCICULE DE BREVET EUROPEEN

(11) **EP 0 445 010 B1**
(45) Date de publication et mention de la délivrance du brevet: **22.09.1993**
(21) Numéro de dépôt: 91400488.2
(22) Date de dépôt: 22.02.1991
(51) Int. Cl.: B64G 1/10, B64G 1/40, H01Q 1/28

(54) **Satellite d'observation de type géostationnaire à système de manoeuvre d'apogée à ergols liquides et à antennes creuses**
Geostationärer Beobachtungssatellit mit einem flüssigtreibstoffgetriebenen Apogäumsmanövriersystem und Hohlantennen
Geostationary observation satellite with liquid propellant apogee maneuvering system and hollow antennae

(30) Priorité: 26.02.1990 FR 9002367; 02.10.1990 FR 9012126
(43) Date de publication de la demande: 04.09.1991
(73) Titulaire: AEROSPATIALE Société Nationale Industrielle, 75781 Paris Cédex 16 (FR)
(72) Inventeur: Maute, Patrick, F-06560 Valbonne (FR); Reboux, Alain, F-83440 Fayence (FR); Huet, Bertrand, F-06140 Vence (FR)
(74) Mandataire: Rinuy, Santarelli

(56) Documents cités:
- FR-A- 2 640 579
- GB-A- 1 156 891
- IEEE - NATIONAL TELECOMMUNICATIONS CONFERENCE HOUSTON, 4-6 décembre 1972 pages 36A1 - 36A8; P.T. BURR et al.: "The synchronous meteorological satellite (SMS) system"
- IEEE - NATIONAL TELECOMMUNICATIONS CONFERENCE HOUSTON, 4-6 décembre 1972 pages 36C1 - 36C4; F.J. DIETRICH: "An amplitude-steered, electronically despun antenna for the synchronous meteorological satellite"

## Description

L'invention concerne la structure générale de satellites, par exemple des satellites d'observation notamment terrestre. Elle vise tout particulièrement le cas de satellites stabilisés en autorotation ; elle concerne notamment, mais non exclusivement, les satellites météorologiques.

Des exemples de satellites géostationnaires de météorologie stabilisés en autorotation ont déjà été mis en oeuvre aux Etats-Unis, en Union Soviétique, au Japon ou en Europe au titre du programme d'observation météorologique appelé en abrégé WWW (WORLD WEATHER WATCH). On peut citer à ce propos les satellites GOES 1 et 4 pour les Etats-Unis, MOP en Europe et GOIS au Japon.

Les satellites d'observation terrestre ont toujours été, jusqu'à présent, à la fois stabilisés en autorotation et munis d'un système de manoeuvre d'apogée à ergols solides.

A l'heure actuelle, aussi bien aux Etats-Unis qu'en Europe notamment, divers projets ou avant-projets sont en cours pour la mise en place de satellites dits de deuxième génération par opposition à ceux déjà existants qualifiés de ce fait de première génération ; ces satellites de deuxième génération visent des performances, notamment en nombre de canaux et en précision, notablement supérieures à celles des satellites de première génération ; ceci s'accompagne d'une masse sèche bien supérieure à celle des satellites de première génération (de 800 à 1500 kg contre 300 à 350 kg environ précédemment).

Depuis l'époque où les satellites de première génération ont été conçus et lancés, une évolution importante a eu lieu dans le domaine de la propulsion des satellites, géostationnaires ou non : la mise en oeuvre des moteurs d'apogée à ergols solides est devenue obsolète au profit de systèmes de propulsion à ergols liquides.

Cette généralisation des ergols liquide au détriment des ergols solides s'explique par une meilleure impulsion spécifique, la possibilité de prévoir un système d'alimentation unifié pour le système de manoeuvre d'apogée et pour le système de correction d'orbite et de contrôle d'attitude, une meilleure flexibilité opérationnelle (possibilité d'une manoeuvre d'apogée en plusieurs phases) et enfin une meilleure flexibilité de concept (on remplit les réservoir en ergols liquides avant le lancement en fonction de la masse réelle, alors qu'avant il fallait choisir pendant la phase de développement le moteur à ergol solide avec son réservoir en fonction de la masse prévisible du satellite une fois fini). En fait, l'utilisation d'ergols liquides se traduit dans l'ensemble par un important gain de masse au lancement.

Une conséquence de cette évolution est qu'il n'existe pas en Europe à l'heure actuelle des moteurs d'apogée à ergols solides qui soient homologués et adaptés aux masses des satellites modernes (800 à 1500 kg de masse sèche).

Or, la mise en oeuvre des tuyères d'apogée à ergols liquides pose un problème spécifique critique dans le cas des satellites d'observation (notamment de météorologie) stabilisés en autorotation.

En effet, la mission de tels satellites d'observation implique la prise d'images de la terre et/ou de son atmosphère dans des canaux infrarouges. Les détecteurs utilisés à cet effet doivent être refroidis à des températures basses, de l'ordre de 100 K, de manière à présenter des caractéristiques acceptables de rapport signal/bruit. Ces basses températures sont classiquement obtenues en plaçant le plan focal de l'instrument d'observation (là où sont situés les détecteurs infrarouges) sous un radiateur de forme tronconique, lui-même placé sur une face transversale du satellite, en regard du vide stellaire, afin de minimiser les flux d'énergie (notamment solaire) provenant de l'extérieur et susceptibles de gêner l'évacuation de calories par ce radiateur. La paroi latérale tronconique de ce radiateur est classiquement inclinée d'un angle légèrement supérieur à 23,5° par rapport à un plan transversal à l'axe d'autorotation et est polie soigneusement (il s'agit le plus souvent d'aluminium) de façon à avoir un excellent coefficient de spécularité et à rejeter en dehors du radiateur les éventuels rayons solaires incidents, même dans les cas les pires (en particulier, solstice d'hiver lorsque le radiateur est sur la face SUD).

Pour l'ensemble des satellites de première génération, le dégagement du champ de vue du radiateur passif vers l'espace froid (vers le SUD) était obtenu par éjection du moteur d'apogée à ergols solides après sa combustion ; le radiateur était situé juste derrière ce moteur d'apogée, au niveau de l'interface satellite/moteur d'apogée, le moteur d'apogée à ergols solides ayant de ce point de vue l'avantage de constituer avec son réservoir un ensemble compact facilement éjectable.

Il est rappelé que la face opposée du satellite (face NORD) est occupée par les antennes de communication avec le sol, lesquelles comportent notamment de façon classique un mât de télécommunication disposé précisément selon l'axe d'autorotation du satellite.

Une telle possibilité d'éjection du système de manoeuvre d'apogée paraît exclue dans le cas d'un système à ergols liquides (surtout dans le cas d'une alimentation unifiée), compte tenu de ce que les ergols destinés à la propulsion d'apogée sont amenés à la tuyère d'apogée (orientée précisément selon l'axe d'autorotation) depuis des réservoirs situés à l'intérieur du corps du satellite par des tuyaux et qu'il n'est pas réaliste, pour des raisons d'étanchéité, de prévoir une coupure entre les réservoirs et la tuyère d'apogée en vue de l'éjection de cette dernière.

La conception des satellites d'observation géostationnaire stabilisés en autorotation suppose donc de résoudre le problème technique suivant : comment y implanter les antennes, disposées axialement, le système de manoeuvre d'apogée à ergols liquides, classiquement disposé axialement, et le radiateur du système d'observation, classiquement disposé axialement, tout en respectant les contraintes découlant de l'autorotation du satellite (notamment, le système d'observation comporte classiquement des pièces optiques mobiles qu'il apparaît essentiel de maintenir aussi près que possible de l'axe d'autorotation pour les soustraire à d'éventuels efforts centrifuges rédhibitoires).

Plus généralement, le problème est de concilier sur un satellite stabilisé par autorotation, un système de propulsion axiale, un jeu d'antennes de communications et un équipement devant, comme le jeu d'antennes, être disposé selon l'axe d'autorotation.

L'invention propose à cet effet, un satellite destiné à être stabilisé en autorotation sur une orbite géostationnaire comportant, coaxiaux à un axe d'autorotation, un corps de satellite entouré d'un générateur solaire cylindrique, au moins deux équipements dont un système de manoeuvre d'apogée disposé selon l'axe, et un jeu d'antennes comportant au moins une antenne de transmission d'images, caractérisé en ce que le jeu d'antennes a globalement la forme d'une couronne disposée sur l'une des faces NORD et SUD du satellite, au centre de laquelle un espace cylindrique est laissé dégagé selon l'axe d'autorotation pour l'un des équipements, tandis que l'autre équipement est sur l'autre des faces NORD et SUD.

Selon des dispositions préférées de l'invention, éventuellement combinées :
- l'équipement situé sur la même face que le jeu d'antennes est un radiateur de système d'observation disposé en regard du vide spatial au travers dudit espace cylindrique,
- l'équipement situé sur la même face que le jeu d'antennes comporte une tuyère d'apogée; de façon avantageuse l'autre équipement, disposé sur la face opposée, est un radiateur de préférence entouré par une jupe,
- ladite antenne de transmission d'images est de forme toroïdale biconique comportant une source annulaire entourant ledit espace cylindrique et formée d'un guide d'ondes,
- cette antenne de transmission d'images a un angle d'ouverture dissymétrique par rapport à un plan transversal à l'axe d'autorotation,
- cette antenne de transmission d'images est adaptée à une bande de fréquence, par exemple comprise dans la bande X ou Ku,
- l'antenne de transmission d'images longe les faces NORD et SUD sur laquelle est disposé le jeu d'antennes,
- le jeu d'antennes comporte en outre une antenne toroïdale biconique adaptée à la réception de données mixtes (images traitées et données auxiliaires) comportant un guide d'ondes annulaire,
- cette seconde antenne est adaptée à une bande de fréquence, par exemple comprise dans la bande S,
- ladite antenne toroïdale biconique est fermée par une paroi annulaire de protection,
- cette paroi annulaire de protection est un diélectrique (par exemple deux parois de "KAPTON" séparées par une structure nid d'abeilles) ou toute autre matière transparente aux ondes radio aux fréquences considérées,
- l'antenne toroïdale biconique a sensiblement le même diamètre que l'antenne de transmission d'images, en lui étant adjacente,
- le jeu d'antennes comporte en outre une antenne annulaire à compensation électronique d'autorotation connue en soi, dont les éléments électroniques d'alimentation et de commutation sont implantés sous une partie périphérique d'une plate-forme supérieure constituant celle des faces NORD et SUD sur laquelle est disposé le jeu d'antennes,
- cette antenne annulaire est adaptée à une bande de fréquence par exemple dans la bande L,
- cette antenne annulaire est disposée axialement au-delà de l'antenne de transmission d'images par rapport au corps de satellite,
- cette antenne annulaire est entourée d'une antenne formée d'une pluralité de dipoles en croix,
- cette antenne est adaptée à la bande UHF,
- le jeu d'antennes comporte en outre une antenne annulaire de transmission de signaux de servitude constituée de microrubans en réseau,
- cette antenne annulaire est adaptée à la bande S,
- cette antenne annulaire est disposée axialement en bout du jeu d'antennes,
- le satellite comporte un troisième équipement comportant un instrument optique d'observation à infrarouges comportant un radiateur, le système de manoeuvre d'apogée comportant une pluralité annulaire d'au moins deux tuyères d'apogée identiques régulièrement distribuées de façon angulaire autour de l'axe d'autorotation, sur la face du satellite opposé au jeu d'antennes, ce radiateur débouchant de cette face opposée à l'intérieur de cette pluralité annulaire de tuyères,
- les tuyères sont au nombre de deux, disposées de façon symétrique de part et d'autre de l'axe d'autorotation,
- ces tuyères sont décalées par rapport à l'axe d'une distance valant au moins la moitié du rayon du générateur solaire cylindrique,
- ces tuyères sont décalées par rapport à l'axe d'une distance valant au moins les deux tiers du rayon du générateur solaire cylindrique.

On appréciera que l'invention a nécessité de renoncer à la structure en mât utilisée jusqu'alors pour certaines au moins des antennes nécessaires à diverses missions essentielles de communication (notamment transmission d'images) avec le sol, et de mettre au point pour ces mêmes missions des antennes de forme toroïdale.

En fait, une telle configuration toroïdale a permis de fournir une réponse efficace à la question, apparemment insoluble dans le cas d'une antenne de transmission d'images en forme de mât (avec des fentes axiales d'émission), de parvenir à une transmission fiable avec le sol, dans une gamme de fréquence très supérieure à celle correspondant aux satellites de première génération, à savoir la bande X ou Ku (environ 7,5 GHz ou 18 GHz respectivement) malgré l'atténuation par l'atmosphère qui augmente avec la fréquence, et sans avoir à augmenter de façon sensible la capacité de génération d'énergie du satellite (liée à la taille du générateur solaire). En effet, une antenne toroïdale biconique, surtout si elle est à proximité immédiate du corps de satellite, permet une meilleure focalisation du faisceau émis.

En outre, l'invention propose avantageusement de disposer les éléments de commutation et d'alimentation des diverses antennes sous la périphérie de la plate-forme du satellite (constitutive de ladite face portant le jeu d'antennes), ce qui s'est révélé permettre une très bonne évacuation vers l'espace (au travers de cette plate-forme) des calories générées du fait du fonctionnement des antennes, et donc des perturbations minimes sur le maintien à basse température des détecteurs de l'instrument optique d'observation.

Il est par ailleurs à noter que l'invention se combine avantageusement à un autre concept inventif, qui propose de remplacer la tuyère d'apogée unique par une pluralité annulaire d'au moins deux tuyères disposées de façon symétrique autour de l'axe sur une face du satellite, ce qui permet d'implanter selon l'axe d'autorotation sur cette même face, le radiateur d'un second instrument optique d'observation à infrarouges, tel qu'un sondeur (connu en soi) visant la caractérisation, notamment en pression, température et humidité, des couches de l'atmosphère.

Des objets, caractéristiques et avantages de l'invention ressortent de la description qui suit, donnée à titre d'exemple non limitatif, en regard des dessins annexés sur lesquels :
- la figure 1 est une vue schématique en perspective avec arrachement partiel d'un satellite conforme à l'invention,
- la figure 2 en est une autre vue en perspective, de côté et de dessus, dans le volume qui lui est associé dans un lanceur du type ARIANE,
- la figure 3 en est une vue en perspective éclatée,
- la figure 4 est une vue en perspective du module de télécommunications de ce satellite,
- la figure 5 est une demi-vue schématique en élévation de la tour d'antennes du module de la figure 4,
- la figure 6 est le circuit électrique d'alimentation associé à une première antenne biconique de la tour de la figure 5, dans le cas où celle-ci fonctionne dans la bande Ku,
- la figure 7 est le circuit électrique d'alimentation associé à cette même antenne biconique de la tour de la figure 5, dans le cas où celle-ci fonctionne dans la bande X,
- la figure 8 est une vue de principe des étapes de l'assemblage du satellite,
- la figure 9 est une vue schématique axiale avec arrachement partiel du système optique d'observation selon la flèche IX de la figure 10,
- la figure 10 en est une vue analogue selon la flèche X de la figure 9,
- la figure 11 est une vue en coupe axiale du radiateur de ce système d'observation,
- la figure 12 est une vue schématique en coupe axiale de ce système optique d'observation implanté à l'intérieur de la tour d'antennes creuse,
- la figure 13 est une vue schématique axiale, avec arrachement partiel, selon la flèche XIII de la figure 14 d'un autre satellite conforme à l'invention, dans le volume associé dans un lanceur de type ARIANE, équipé d'un deuxième instrument d'observation à détecteurs infrarouges,
- la figure 14 en est une autre vue axiale, selon la flèche XIV de la figure 13,
- la figure 15 en est une vue en perspective,
- la figure 16 est un schéma du système d'alimentation unifié en ergols liquides, adapté au cas des figures 13 à 15, et
- la figure 17 est une shématique en élévation d'un troisième satellite conforme à l'invention, dont la tuyère d'apogée est implantée sur la même face que le jeu d'antennes.

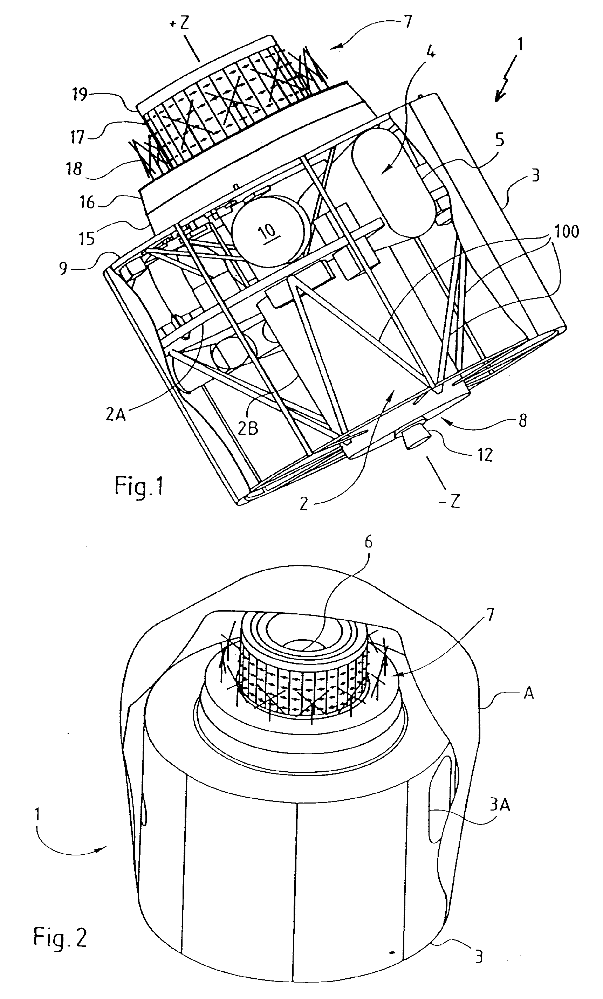

Les figures 1 à 3 représentent un satellite d'observation destiné à être stabilisé en autorotation autour d'un axe (-Z,+Z) sur une orbite géostationnaire, désigné dans son ensemble par la référence 1.

A la figure 2, ce satellite est représenté dans une enveloppe notée A, représentant le volume qui lui est attribué dans une structure porteuse et de lancement double du type ARIANE.

Ce satellite comporte principalement: un corps noté 2 dans son ensemble et entouré par une enveloppe cylindrique 3 recouverte de cellules solaires et constituant un générateur solaire, un système optique d'observation à détecteurs infrarouges noté 4, muni d'un baffle d'entrée 5 disposé radialement et d'un radiateur 6 disposé sur une face transversale du corps (sur la face NORD), un jeu d'antennes (on parle parfois d'une tour d'antennes) de télécommunication et de transmission d'images noté 7 dans son ensemble et disposé en saillie sur cette même face transversale NORD, et un système de propulsion d'apogée noté 8 dans son ensemble, et disposé axialement dans son ensemble et débouchant vers le SUD.

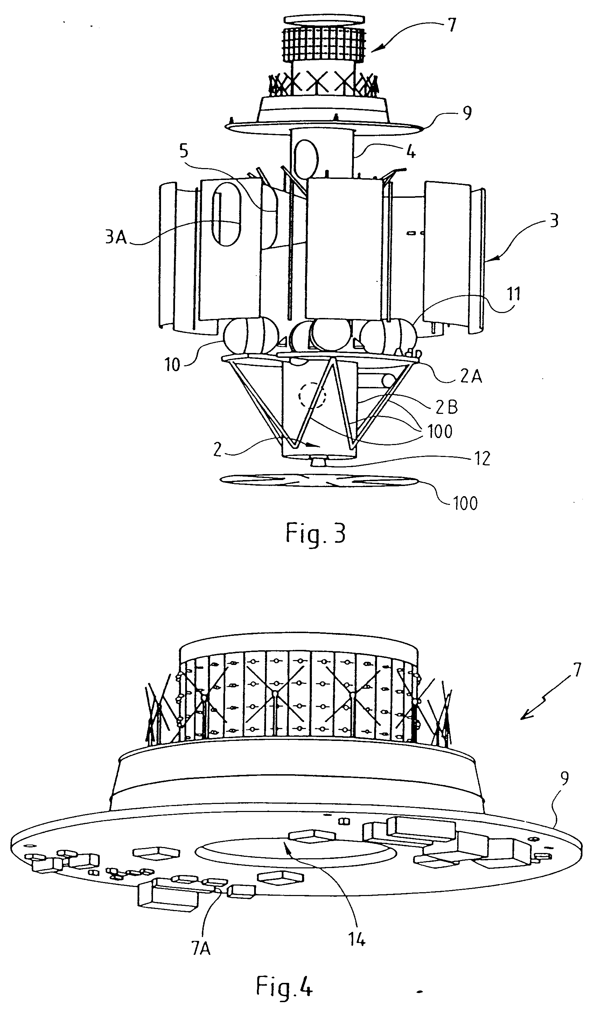

Ainsi que cela ressort des figures 1 et 3, le corps de satellite 2, parfois appelé module de service, comporte classiquement une plate-forme principale 2A disposée transversalement et un tube 2B disposé axialement solidaire de cette plate-forme.

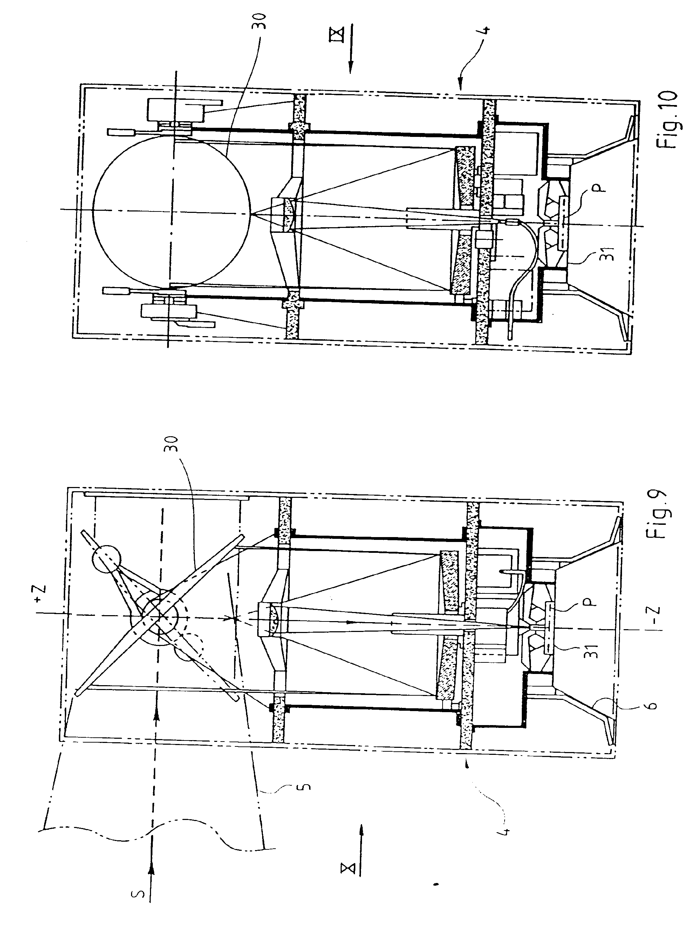

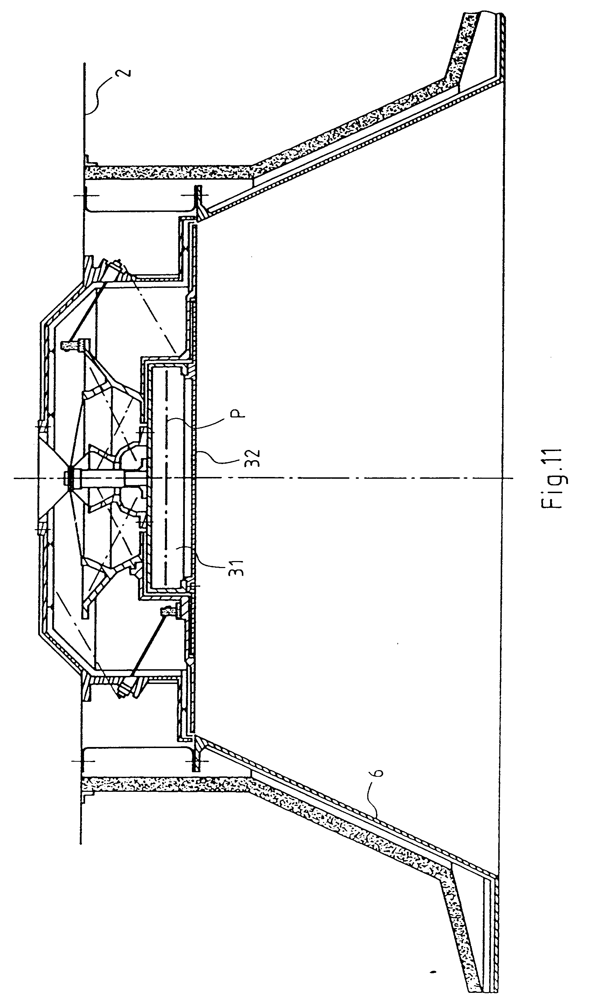

A la partie supérieure de ce tube 2B est asujetti le système d'observation 4 représenté plus en détail aux figures 9 à 11, dont le baffle 5 traverse ce tube en étant disposé en regard d'une ouverture 3A ménagée dans le générateur solaire. A sa partie supérieure, ce corps de satellite 2 est fermé par une plate-forme supérieure 9 à laquelle est assujetti le jeu d'antennes 7 détaillé aux figures 4 à 7.

L'ensemble de cette plate-forme et des antennes constitue un module de télécommunications et de transmission d'images.

Le jeu d'antennes est creux, ayant globalement la forme d'une couronne disposée sur la face NORD du satellite ; au centre de cette couronne est maintenu dégagé un espace cylindrique noté 14 à la figure 4, adapté à être pénétré par le radiateur 6.

L'ensemble des éléments électroniques associés aux diverses antennes (notamment éléments de commutation et d'alimentation, dont des répéteurs 7A...) sont implantés sous la périphérie de la plate-forme 9, ce qui assure une bonne évacuation vers l'espace des calories qui y sont générées, sans perturber pour autant le régime thermique du radiateur 6.

Dans l'exemple considéré, le module 7+9 comporte cinq antennes notées 15 à 19, effectuant chacune une mission de transmission ou de réception.

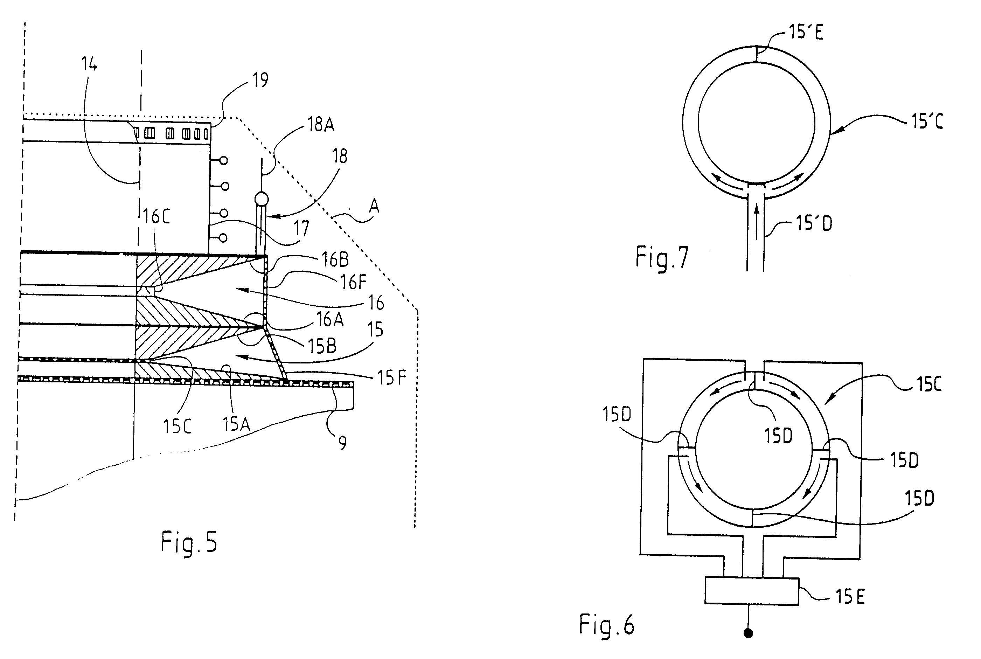

Le long de la plate-forme annulaire 9 est ainsi implantée l'antenne 15 qui est de type toroïdal biconique ; elle comporte deux parois tronconiques 15A et 15B s'évasant à partir d'une source annulaire 15C constituée d'un guide d'ondes de grand diamètre représenté à la figure 6 : ce guide comporte quatre secteurs à 90°, séparés par des zones 15D de court-circuit, et alimentés en parallèle à partir d'un diviseur de puissance 15E.

Cette antenne est adaptée à émettre des images brutes vers la Terre, vers des stations de retraitement. Cette émission se fait dans l'exemple considéré dans une gamme d'hyperfréquences dans la bande Ku (par exemple à 18 GHz).

La figure 7 correspond à une variante de réalisation de la source annulaire, notée 15'C, adaptée à la bande X (par exemple 7,5 GHz), avec un guide d'ondes d'entrée 15'D et une zone de coupure/court-circuit 15'E.

L'amplitude angulaire du faisceau de cette antenne 15 est définie par les parois 15A et 15B. Pour permettre une focalisation optimale vers la zone du sol comportant les stations terrestres de réception, ces parois 15A et 15B peuvent avoir des inclinaisons différentes par rapport à l'axe. Dans l'exemple considéré, l'angle du faisceau est de 7° environ, décalé vers le NORD pour couvrir de façon sélective l'Europe (cas d'un satellite européen).

En variante non représentée, cette antenne annulaire peut être réalisée selon la technologie des antennes en microruban en réseau.

L'antenne 15 est protégée par une paroi 15F transparente aux faisceaux émis, par exemple en carbone.

L'antenne 16 est également biconique, bordée par des parois tronconiques 16A et 16B, ici de même conicité, s'évasant à partir d'une source annulaire 16C qui est par exemple similaire à celle de la figure 7. Elle est aussi protégée par une paroi annulaire 16F par exemple en carbone.

Cette antenne 16 est destinée à la réception de données (à retransmettre ensuite) émises par une station au sol et correspondant à une version traitée des images brutes envoyées par l'antenne 15, et à des données auxiliaires.

Cette antenne travaille dans la bande S de fréquences (de l'ordre de 2,1 GHz) avec une amplitude angulaire de faisceau ici égale à 20°.

L'antenne 17 est destinée à retransmettre vers des stations terrestres les images traitées reçues par l'antenne 16. Elle est, sauf en ce qui concerne l'implantation des éléments électroniques associés (voir ci-dessus), d'un type connu en soi pour une fonction similaire dans les satellites de première génération. Elle est électroniquement "déspinée", c'est-à-dire que l'autorotation y est compensée électroniquement.

Elle travaille dans la gamme de fréquences L (de l'ordre de 1,69 GHz) avec un angle de faisceau typiquement égal à 20°.

Autour de cette antenne 17 est disposée une pluralité annulaire de dipoles en croix 18A constituant l'antenne 18 : cette dernière est adaptée à travailler dans la gamme UHF (par exemple à environ 402 MHz) et est destinée à la réception de données émises par des balises météo terrestres.

Enfin, l'antenne 19, formée selon la technologie à microrubans en réseau, est montée dans le prolongement axial de l'antenne 17. Elle travaille dans la bande S (approximativement 2,1 GHz) et sert à échanger avec une station de commande au sol des signaux de servitude (télécommandes, télémesures...). Son angle est typiquement de 80°.

La disposition de l'empilement d'antennes de la figure 5 est préférée, mais peut faire l'objet de variantes.

En fait, il a été constaté que la concentricité des antennes 17 et 18 n'induit pas d'interférences.

Il est préféré de disposer l'antenne 19 en bout car cela facilite l'obtention d'un grand angle d'émission.

Il est recommandé de placer l'antenne 15 auprès de la plate-forme 9 puisque la réflexion sur la face NORD que constitue cette plate-forme n'est pas critique.

A titre d'exemple, pour un diamètre de 3,2 m pour le générateur solaire, les parois de protection 15F et 16F ont un diamètre de 2 m, et les antennes 17 et 19 ont un diamètre de 1,3 m, tandis que le dégagement cylindrique central 14 a un diamètre d'environ 1 m correspondant au diamètre externe du module d'observation 4.

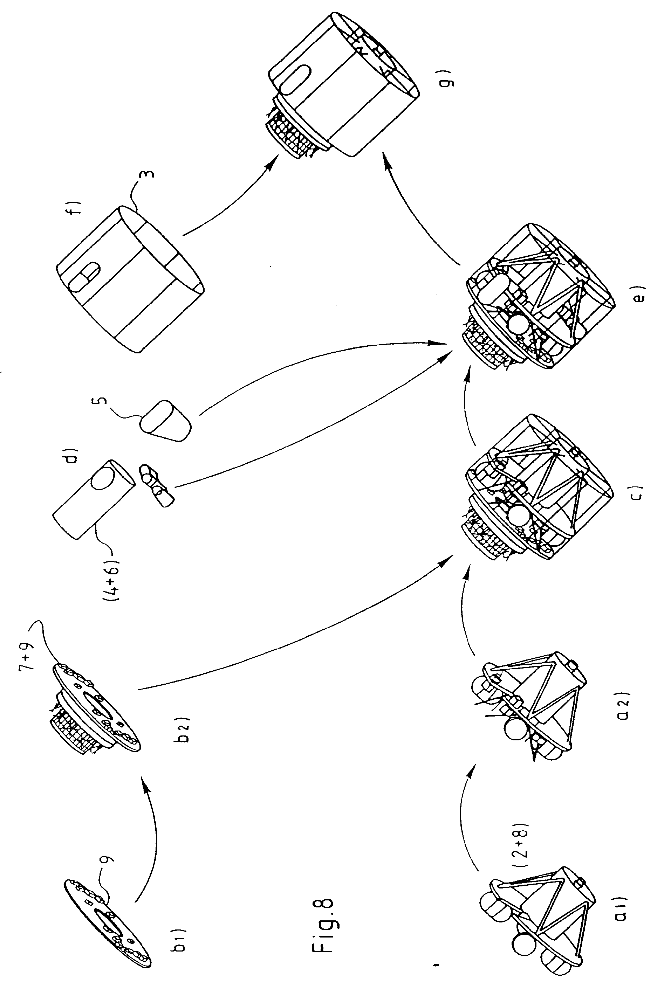

Ainsi qu'il ressort de la figure 8, la conception du satellite 1 permet une intégration modulaire de celui-ci :
- constitution en a₁) et a₂) du module de service et de combustion 2+8, parallèlement à la constitution en b₁ et b₂ du module d'antennes 7+9,
- assemblage en c) des modules 2+8, et 7+9,
- montage en d) du module d'observation 4+5+6,
- assemblage en e) du module 4+5+6 avec les modules 2+8, et 7+9,
- montage du module de générateur solaire en f) puis assemblage de celui-ci en g).

On appréciera que l'ordre d'intégration des modules d) et f) peut être inversé.

Autour du tube 2B ( figure 3 ) est disposé le système de propulsion d'apogée 8. En fait, ce système comporte un circuit d'alimentation en ergols liquides classique en soi également connecté à des tuyères de contrôle d'attitude et de correction d'orbite de tout type connu approprié (non représentées).

Ce système de propulsion 8 comporte notamment des réservoirs d'ergols 10 et 11 maintenus en place dans le corps de satellite par diverses traverses ou cercles de rigidification et de fixation de tout type connu approprié (dont certaines sont représentées aux figures 1 et 3 sous la référence 100) et une tuyère d'apogée centrale 12 classique (poussée de 400 N en pratique).

Le système d'observation 4 est classique en soi et ce n'est qu'à titre de rappel qu'il est présenté aux figures 9 à 11.

Il comporte principalement un miroir 30 qui renvoie un rayonnement incident S, parallèlement à l'axe, sur un plan de focalisation schématisé en P aux figures 9 à 11 situé dans un logement 31 contenant des détecteurs infrarouges de tout type connu approprié longeant une surface radiative transversale 32, par exemple recouverte d'une peinture blanche connue appropriée entourée par radiateur tronconique 6.

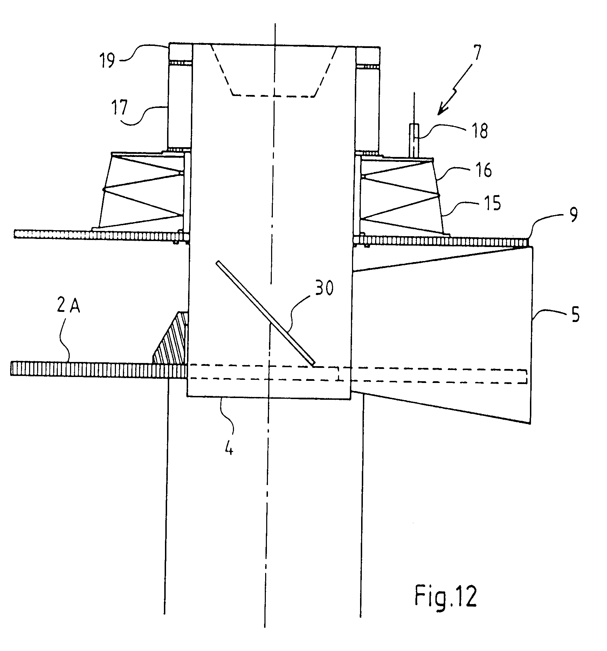

Le positionnement relatif du module d'observation dans le corps de satellite est représenté à la figure 12.

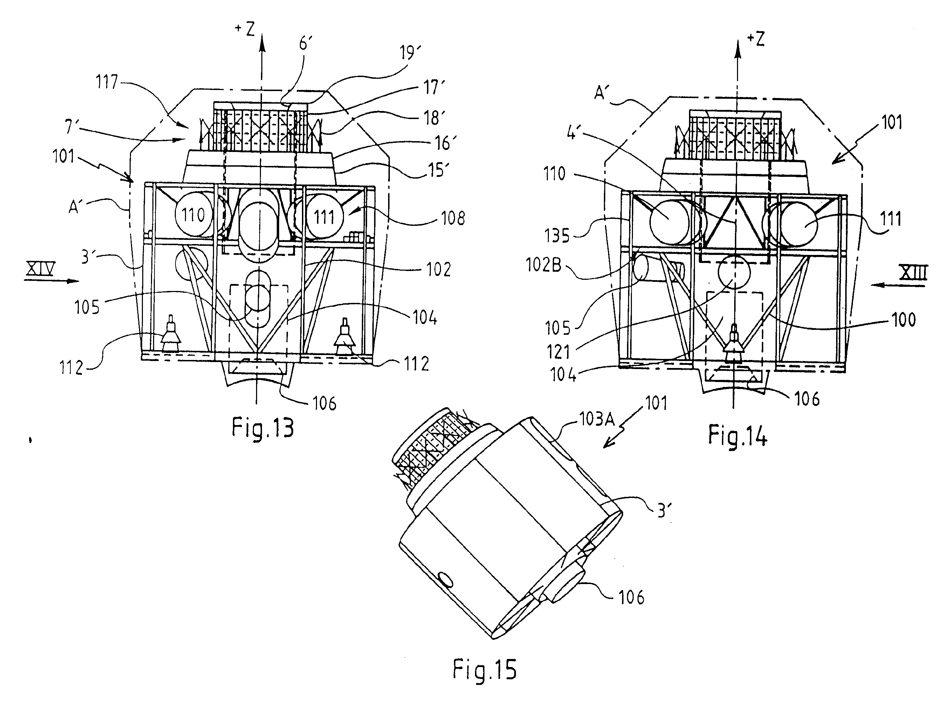

Les figures 13 à 16 décrivent une variante de réalisation d'un satellite selon l'invention, noté 101 dans son ensemble, se distinguant du satellite 1 des figures précédentes par l'existence d'un deuxième système optique d'observation à détecteurs infrarouges.

Ce satellite 101 est représenté aux figures 13 et 14 dans une enveloppe A'.

Ce satellite 101 comportant de nombreux éléments similaires à ceux du satellite 1, des numéros de références similaires à ceux utilisés pour le satellite 1 ont été utilisés sur ces figures 13 à 16, après addition d'un indice "prime" en ce qui concerne les éléments structurels globaux ou du nombre 100 en ce qui concerne le système de combustion à ergols liquides.

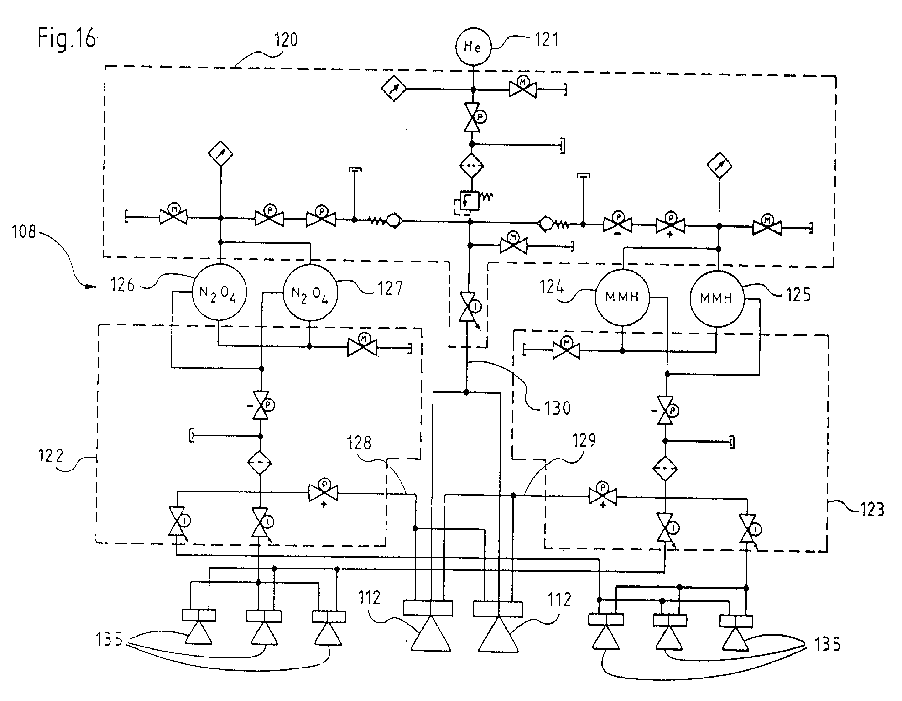

Ainsi que cela est développé à la figure 16, ce circuit de combustion comporte de manière classique un étage de pressurisation et deux étages d'alimentation 122 et 123 spécifiques de chacun des ergols.

Pour permettre l'implantation d'un radiateur 106 faisant partie d'un second instrument d'observation 104, la tuyère de combustion unique du satellite 1 a été remplacée par une pluralité annulaire de tuyères identiques 112 disposées sur la face SUD en laissant dégagé un espace central pour ledit radiateur 106. Ces tuyères sont décalées par rapport à l'axe d'une distance valant au moins la moitié, si ce n'est les deux tiers, du rayon du générateur solaire 3'.

Ce concept de satellite 101 inclut donc deux solutions au problème technique visé par l'invention.

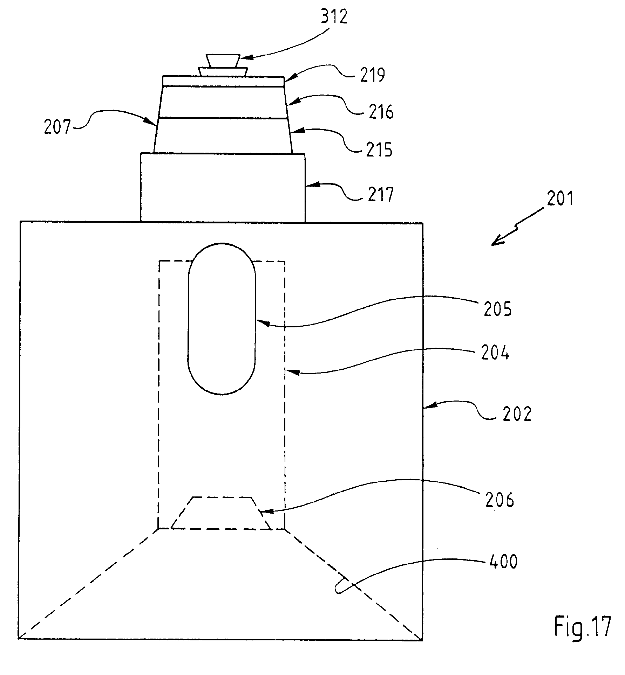

La figure 17 présente shématiquement sous la référence 201 un troisième satellite comportant, comme précédemment dans un corps de satellite, une tour d'antennes creuse, analogue à celle des figures 4 et 5, une tuyère d'apogée et le radiateur d'un instrument d'observation. Toutefois c'est ici la tuyère d'apogée 312 qui est située à l'intérieur de la tour d'antennes 207 tandis que le radiateur 206 est sur la face opposée. En pratique, ce radiateur débouche hors de la tour d'antennes.

L'encombrement du système d'observation dans le corps du satellite 202 est désigné par la référence générale 204; la référence 205 désigne le baffle d'entrée de ce système.

Le radiateur 206 de ce système d'observation est avantageusement entouré par une jupe 400 solidaire du corps 202, ici tronconique, de conicité et de dimension axiale propres à empêcher toute pénétration de rayons solaires jusqu'au radiateur (même aux solstices, celui d'hiver dans le cas représenté); cette jupe est en un matériau soigneusement poli et réfléchissant (typiquement aluminium poli).

Cette forme particulière de satellite, avec la jupe 400, est rendue possible grâce à la compacité du jeu d'antennes 207 qui est notablement moins haut (parallèlement à l'axe d'autorotation) que les mâts de télécommunications (en bande S) utilisés sur les satellites dits "de première génération".

Cette configuration permet d'abaisser la température du plan focal jusqu'au dessous de 90K. Cette configuration permet ainsi une optimisation de la qualité des observations dans l'infrarouge.

Dans l'exemple représenté à la figure 17, la tour d'antennes 207 comporte, à partir de la surface transversale NORD du satellite, notice 209 : une antenne 217 en bande S similaire à l'antenne 17 de la figure 5 et entourée d'une antenne (non représentée) analogue à l'antenne 18, puis des antennes 215 (en bande X ou Ku), 216 (en bande S) et 219 (en bande S) analogues aux antennes 15,16 et 19.

Il va de soi que la description qui précède n'a été proposée qu'à titre d'exemple non limitatif et que de nombreuses variantes peuvent être proposées par l'homme de l'art sans sortir du cadre de l'invention.

En particulier, les antennes toroïdales 15 et 16 peuvent être obtenues à l'aide de la technologie des microrubans en réseau décrite à propos de l'antenne 19.

## Revendications

1. Satellite (1) destiné à être stabilisé en autorotation sur une orbite géostationnaire comportant, coaxiaux à un axe d'autorotation (-Z+Z), un corps de satellite (2, 102) entouré d'un générateur solaire (3, 3'), au moins deux équipements (6,106,206,12,112,212) dont un système de manoeuvre d'apogée (8, 108) disposé selon l'axe et un jeu d'antennes (7, 7') comportant au moins une antenne de transmission d'images (15, 15'), caractérisé en ce que le jeu d'antennes a globalement la forme d'une couronne disposée sur l'une des faces NORD et SUD du satellite, au centre de laquelle un espace cylindrique (14) est laissé dégagé selon l'axe d'autorotation, pour l'implantation de l'un des équipements tandis que l'autre équipement est implanté sur l'autre des faces NORD et SUD.

2. Satellite selon la revendication 1, caractérisé en ce que le système de manoeuvre d'apogée est à ergols liquides.

3. Satellite selon la revendication 1 ou la revendication 2, caractérisé en ce que l'équipement situé sur la même face que le jeu d'antennes est un radiateur (6, 6', 106) de système d'observation disposé en regard du vide spatial au travers dudit espace cylindrique.

4. Satellite selon la revendication 1 ou la revendication 2, caractérisé en ce que l'équipement situé sur la même face que le jeu d'antennes comporte une tuyère d'apogée (212).

5. Satellite selon la revendication 4, caractérisé en ce que l'autre équipement, disposé sur la face opposée, est un radiateur (206) d'un système d'observation, autour de laquelle est disposée une jupe axiale (400), solidaire du corps du satellite (202).

6. Satellite selon l'une quelconque des revendications 1 à 5, caractérisé en ce que ladite antenne de transmission d'images (15, 15', 215) est de forme toroïdale biconique comportant une source annulaire (15C) entourant ledit espace cylindrique et formée d'un guide d'ondes.

7. Satellite selon la revendication 6, caractérisé en ce que cette antenne de transmission d'images (15, 15') a un angle d'ouverture dissymétrique par rapport à un plan transversal à l'axe d'autorotation.

8. Satellite selon la revendication 6 ou la revendication 7, caractérisé en ce que cette antenne de transmission d'images est adaptée à une bande de fréquence comprise dans la bande X ou Ku.

9. Satellite selon l'une quelconque des revendications 1 à 8, caractérisé en ce que l'antenne de transmission d'images longe celle des faces NORD et SUD sur laquelle est implanté le jeu d'antennes.

10. Satellite selon l'une quelconque des revendications 1 à 9, caractérisé en ce que le jeu d'antennes comporte en outre une antenne toroïdale biconique de réception de données (16, 16', 216), comportant un guide d'ondes annulaire.

11. Satellite selon la revendication 10, caractérisé en ce que cette antenne de réception (16, 16') est adaptée à une bande de fréquence comprise dans la bande S.

12. Satellite selon l'une quelconque des revendications 6 à 11, caractérisé en ce que ladite antenne toroïdale biconique est fermée par une paroi annulaire de protection (15F, 16F).

13. Satellite selon la revendication 12, caractérisé en ce que cette paroi annulaire de protection est en un matériau diélectrique.

14. Satellite selon la revendication 10 ou la revendication 11, caractérisé en ce que cette antenne toroïdale biconique de réception a sensiblement le même diamètre que l'antenne de transmission d'images, en lui étant adjacente.

15. Satellite selon l'une quelconque des revendications 1 à 14, caractérisé en ce que le jeu d'antennes comporte en outre une antenne annulaire (17, 17', 217) à compensation électronique d'autorotation connue en soi, comportant des éléments électroniques d'alimentation et de commutation (7A) implantés sous une partie périphérique d'une plate-forme supérieure (9) constituant celle des faces NORD et SUD sur laquelle est implantée le jeu d'antennes.

16. Satellite selon la revendication 15, caractérisé en ce que cette antenne annulaire (17, 17') est adaptée à une fréquence dans la bande L.

17. Satellite selon la revendication 15 ou la revendication 16, caractérisé en ce que cette antenne annulaire est disposée axialement au-delà de l'antenne de transmission d'images par rapport au corps de satellite.

18. Satellite selon l'une quelconque des revendications 15 à 17, caractérisé en ce que cette antenne annulaire est entourée d'une antenne (18) formée d'une pluralité de dipoles en croix (18A).

19. Satellite selon la revendication 18, caractérisé en ce que cette antenne (18) est adaptée à la bande UHF.

20. Satellite selon l'une quelconque des revendications 1 à 19, caractérisé en ce que le jeu d'antennes comporte en outre une antenne annulaire de transmission de signaux de servitude (19, 219) constituée de microrubans en réseau.

21. Satellite selon la revendication 20, caractérisé en ce que cette antenne annulaire est adaptée à la bande S.

22. Satellite selon la revendication 20 ou la revendication 21, caractérisé en ce que cette antenne annulaire est disposée axialement en bout du jeu d'antennes.

23. Satellite selon l'une quelconque des revendications 1 à 22, caractérisé en ce qu'il comporte un troisième équipement comportant un instrument optique d'observation à détecteurs infrarouges (104) comportant un radiateur (106), le système de manoeuvre d'apogée comportant une pluralité annulaire (112) d'au moins deux tuyères d'apogée identiques régulièrement distribuées de façon angulaire autour de l'axe d'autorotation, sur la face du satellite opposée au jeu d'antennes, ce second radiateur (106) débouchant de cette face opposée à l'intérieur de cette pluralité annulaire de tuyères.

24. Satellite selon la revendication 23, caractérisé en ce que les tuyères (112) sont au nombre de deux, disposées de façon symétrique de part et d'autre de l'axe d'autorotation.

25. Satellite selon la revendication 23 ou la revendication 24, caractérisé en ce que ces tuyères sont décalées par rapport à l'axe d'une distance valant au moins la moitié du rayon du générateur solaire cylindrique.

26. Satellite selon la revendication 25, caractérisé en ce que ces tuyères sont décalées par rapport à l'axe d'une distance valant au moins les deux tiers du rayon du générateur solaire cylindrique.

## Patentansprüche

1. Satellit (1), der dazu bestimmt ist, auf einem geostationären Orbit autorotationsstabilisiert zu werden und koaxial zu einer Autorotationsachse (-Z+Z) einen von einem Solargenerator (3, 3') umgebenen Satellitenkörper (2, 102), wenigstens zwei Ausrüstungen (6, 106, 206, 12, 112, 212), worunter sich ein in der Achse angeordnetes Apogäumsmanöversystem (8,108) befindet, und einen Antennensatz (7, 7) umfaßt, der wenigstens eine Bildübertragungsantenne (15, 15') umfaßt, dadurch gekennzeichnet, daß der Antennensatz in etwa die Form eines Kranzes hat, der auf einer der Nord- und Südseiten des Satelliten angeordnet ist und in dessen Mitte ein zylindrischer Raum (14) in der Autorotationsachse zum Einbau einer der Ausrüstungen freigelassen ist, während die andere Ausrüstung auf der anderen der Nord- und Südseiten eingebaut ist.

2. Satellit nach Anspruch 1, dadurch gekennzeichnet, daß das Apogäumsmanöversystem flüssigtreibstoffgetrieben ist.

3. Satellit nach Anspruch 1 oder 2, dadurch gekennzeichnet, daß die auf derselben Seiten wie der Antennensatz gelegene Ausrüstung ein Kühler (6, 6', 106) eines Beobachtungsystem ist, der über den zylindrischen Raum gegenüber dem Raumvakuum angeordnet ist.

4. Satellit nach Anspruch 1 oder 2, dadurch gekennzeichnet, daß die auf derselben Seite wie der Antennensatz gelegene Ausrüstung eine Apogäumsdüse (212) umfaßt.

5. Satellit nach Anspruch 4, dadurch gekennzeichnet, daß die andere, auf der entgegengesetzten Seite angeordnete Ausrüstung ein Kühler (206) eines Beobachtungssystems ist, welcher von einem mit dem Satellitenkörper (202) fest verbundenen axialen Mantel (400) umgeben ist.

6. Satellit nach einem der Ansprüche 1 bis 5, dadurch gekennzeichnet, daß die Bildübertragungsantenne (15, 15', 215) eine doppelkegelförmige torische Form hat und eine ringförmige Quelle (15C) umfaßt, die den zylindrischen Raum umgibt und von einem Wellenleiter gebildet ist.

7. Satellit nach Anspruch 6, dadurch gekennzeichnet, daß der Öffnungswinkel der Bildübertragungsantenne (15, 15') bezüglich einer quer zur Autorotationsachse verlaufenden Ebene unsymmetrisch ist.

8. Satellit nach Anspruch 6 oder 7, dadurch gekennzeichnet, daß die Bildübertragungsantenne an ein im X-Band oder Ku-Band liegendes Frequenzband angepaßt ist.

9. Satellit nach einem der Ansprüche 1 bis 8, dadurch gekennzeichnet, daß die Bildübertragungsantenne sich längs derjenigen der Nord- und Südseiten erstreckt, auf welcher der Antennensatz montiert ist.

10. Satellit nach einem der Ansprüche 1 bis 9, dadurch gekennzeichnet, daß der Antennensatz ferner eine doppelkegelförmige torische Datenempfangsantenne (16, 16', 216) umfaßt, die einen ringförmigen Wellenleiter aufweist.

11. Satellit nach Anspruch 10, dadurch gekennzeichnet, daß die Empfangsantenne (16, 16') an ein im S-Band liegendes Frenquenzband angepaßt ist.

12. Satellit nach einem der Ansprüche 6 bis 11, dadurch gekennzeichnet, daß die doppelkegelförmige torische Antenne durch eine ringförmige Schutzwand (15F, 16F) geschlossen ist.

13. Satellit nach Anspruch 12, dadurch gekennzeichnet, daß diese ringförmige Schutzwand aus einem dielektrischen Werkstoff besteht.

14. Satellit nach Anspruch 10 oder 11, dadurch gekennzeichnet, daß die dopppelkegelförmige torische Empfangsantenne im wesentlichen denselben Durchmesser wie die Bildübertragungsantenne hat, wobei sie an dieser anliegt.

15. Satellit nach einem der Ansprüche 1 bis 14, dadurch gekennzeichnet, daß der Antennensatz ferner eine an sich bekannte ringförmige Antenne (17, 17', 217) mit elektronischer Autorotationskompensation umfaßt, die elektronische Speise- und Schaltelemente (7A) aufweist, die unter einem Umfangsteil einer oberen Plattform (9) montiert sind, die diejenige der Nord- und Südseiten bildet, auf der der Antennensatz montiert ist.

16. Satellit nach Anspruch 15, dadurch gekennzeichnet, daß diese ringförmige Antenne (17, 17') an eine Frequenz im L-Band angepaßt ist.

17. Satellit nach Anspruch 15 oder 16, dadurch gekennzeichnet, daß die ringförmige Antenne bezüglich des Satellitenkörpers axial jenseits der Bildübertragungsantenne angeordnet ist.

18. Satellit nach einem der Ansprüche 15 bis 17, dadurch gekennzeichnet, daß die ringförmige Antenne von einer Antenne (18) umgeben ist, die von einer Vielzahl von gekreuzten Dipolen (18A) gebildet ist.

19. Satellit nach Ansnpruch 18, dadurch gekennzeichnet, daß diese Antenne (18) an das UHF-Band angepaßt ist.

20. Satellit nach einem der Ansprüche 1 bis 19, dadurch gekennzeichnet, daß der Antennensatz ferner eine ringförmige Antenne (19, 219) zur Übertragung von Routinesignalen umfaßt, die aus netzförmig angeordneten Mikrobändern besteht.

21. Satellit nach Anspruch 20, dadurch gekennzeichnet, daß die ringförmige Antenne an das S-Band angepaßt ist.

22. Satellit nach Anspruch 20 oder 21, dadurch gekennzeichnet, daß die ringförmige Antenne axial am Ende des Antennensatzes angeordnet ist.

23. Satellit nach einem der Ansprüche 1 bis 22, dadurch gekennzeichnet, daß er eine dritte Ausrüstung umfaßt, die ein optisches Beobachtungsinstrument (104) mit Infrarotsensoren umfaßt, das einen Kühler (106) aufweist, wobei das Apogäümsmanöversystem eine ringförmige Gruppe (112) von wenigstens zwei gleich ausgebildeten, regelmäßig ringförmig um die Autorotationsachse verteilten Apogäumsdüsen auf der dem Antennensatz entgegengesetzten Seite des Satelliten umfaßt, wobei dieser zweite Kühler (106) im Inneren dieser ringförmigen Düsengruppe aus dieser entgegengesetzten Seite ausmündet.

24. Satellit nach Anspruch 23, dadurch gekennzeichnet, daß zwei Düsen (112) vorgesehen sind, die symmetrisch zu beiden Seiten der Autorotationsachse angeordnet sind.

25. Satellit nach Anspruch 23 oder 24, dadurch gekennzeichnet, daß die Düsen bezüglich der Achse um einen Abstand versetzt sind, der wenigstens gleich der Hälfte des Radius des zylindrischen Solargenerators ist.

26. Satellit nach Anspruch 25, dadurch gekennzeichnet, daß die Düsen bezüglich der Achse um einen Abstand versetzt sind, der wenigstens gleich zwei Dritteln des Radius des zylindrischen Solargenerators ist.

## Claims

1. Satellite (1) intended to be spin-stabilised in geostationary orbit comprising, coaxial with a spin-rotation axis (-Z+Z), a satellite body (2, 102) surrounded by a solar generator (3, 3'), at least two items of equipment (6, 106, 206, 12, 112, 212) including an apogee manoeuvre system (8, 108) disposed along the axis and a set of antennae (7, 7') including at least one picture transmission antenna (15, 15'), characterised in that the set of antennae is annular in shape overall and is disposed on one of the NORTH and SOUTH faces of the satellite, at the centre of which a cylindrical space (14) is left clear along the spin-rotation axis to house one of the said items of equipment, whilst the other item of equipment is mounted on the other one of the NORTH and SOUTH faces.

2. Satellite according to Claim 1, characterised in that the apogee manoeuvre system is of the liquid propellant type.

3. Satellite according to Claim 1 or Claim 2, characterised in that the item of equipment situated on the same face as the set of antennae is an observation system radiator (6, 6', 106) facing towards deep space through the said cylindrical space.

4. Satellite according to Claim 1 or Claim 2, characterised in that the item of equipment situated on the same face as the set of antennae comprises an apogee thruster (212).

5. Satellite according to Claim 4, characterised in that the other item of equipment, disposed on the opposite face, is an observation system radiator (206) around which is disposed an axial skirt (400) fixed to the satellite body (202).

6. Satellite according to any one of Claims 1 to 5, characterised in that the said picture transmission antenna (15, 15', 215) is a biconical toroidal antenna comprising an annular source(15C) surrounding the said cylindrical space and formed by a waveguide.

7. Satellite according to Claim 6, characterised in that this picture transmission antenna (15, 15') has an asymmetric aperture angle relative to a plane transverse to the spin-rotation axis.

8. Satellite according to Claim 6 or Claim 7, characterised in that this picture transmission antenna is suitable for a frequency band in the X or Ku band.

9. Satellite according to any one of Claims 1 to 8, characterised in that the picture transmission antenna runs alongside the particular NORTH or SOUTH face on which the set of antennae is mounted.

10. Satellite according to any one of Claims 1 to 9, characterised in that the set of antennae further comprises a biconical toroidal data-reception antenna (16, 16', 216) comprising an annular waveguide.

11. Satellite according to Claim 10, characterised in that this reception antenna (16, 16') is suitable for a frequency band in the S band.

12. Satellite according to any one of Claims 6 to 11, characterised in that the said biconical toroidal antenna is enclosed by an annular protective wall (15F, 16F).

13. Satellite according to Claim 12, characterised in that this annular protective wall is made from a dielectric material.

14. Satellite according to Claim 10 or Claim 11, characterised in that this biconical toroidaL reception antenna has substantially the same diameter as the picture transmission antenna and is adjacent thereto.

15. Satellite according to any one of Claims 1 to 14, characterised in that the set of antennae further comprises an annular antenna (17, 17', 217) with electronic spin-stabilisation compensation, known per se, and comprising supply and switching electronic means (7A) mounted under a peripheral part of an upper platform (9) constituting the particular one of the NORTH or SOUTH faces of the satellite on which the set of antennae is mounted.

16. Satellite according to Claim 15, characterised in that this annular antenna (17, 17') is suitable for a frequency in the L band.

17. Satellite according to Claim 15 or Claim 16, characterised in that this annular antenna is disposed axially beyond the picture transmission antenna relative to the satellite body.

18. Satellite according to any one of Claims 15 to 17, characterised in that this annular antenna is surrounded by an antenna (18) formed by a plurality of crossed dipoles (17A).

19. Satellite according to Claim 18, characterised in that this antenna (18) is suitable for the UHF band.

20. Satellite according to any one of Claims 1 to 19, characterised in that the set of antennae further comprises an annular control signal transmission antenna (19, 219) consisting of a microstrip array.

21. Satellite according to Claim 20, characterised in that this annular antenna is'suitable for the S band.

22. Satellite according to Claim 20 or Claim 21, characterised in that this annular antenna is disposed axially at one end of the set of antennae.

23. Satellite according to any one of Claims 1 to 22, characterised in that it comprises a third item of equipment comprising an optical observation instrument with infrared sensors (104) comprising a radiator (106), the apogee manoeuvre system comprising an annular plurality (112) of at least two identical apogee thrusters equi-angularly distributed around the said spin-rotation axis on the face of the satellite opposite the set of antennae, this second radiator (106) projecting from this opposite face within this annular plurality of thrusters.

24. Satellite according to Claim 23, characterised in that the thrusters (112) are two in number and are disposed symmetrically on each side of the spin-rotation axis.

25. Satellite according to Claim 23 or Claim 24, characterised in that these thrusters are offset from the axis by a distance which is at least half the radius of the cylindrical solar generator.

26. Satellite according to Claim 25, characterised in that these thrusters are offset from the axis by a distance which is at least two-thirds the radius of the cylindrical solar generator.
